# EUROPÄISCHE PATENTSCHRIFT

(11) **EP 4 102 004 B1**
(45) Veröffentlichungstag und Bekanntmachung des Hinweises auf die Patenterteilung: **06.11.2024**
(21) Anmeldenummer: 22176285.9
(22) Anmeldetag: 31.05.2022
(51) Int. Cl.: E04D 13/00, A01M 29/30

(54) **SCHUTZVORRICHTUNG FÜR EINE GEBÄUDEHÜLLE**
PROTECTION DEVICE FOR A BUILDING SHELL
DISPOSITIF DE PROTECTION POUR UNE ENVELOPPE DE BÂTIMENT

(30) Priorität: 11.06.2021 CH 6862021
(43) Veröffentlichungstag der Anmeldung: 14.12.2022
(73) Patentinhaber: HTR Protect GmbH, 4466 Ormalingen (CH)
(72) Erfinder: Heuberger, Mirco, 4448 Läufelfingen (CH); Thommen, Alex Lucas, 4460 Gelterkinden (CH)
(74) Vertreter: Kieffer, Valentin

(56) Entgegenhaltungen:
- EP-A1- 0 693 152
- US-A- 2 020 103
- US-A- 2 035 862
- US-A- 2 459 120
- US-A- 4 081 647
- US-A1- 2017 145 696
- US-A1- 2019 242 181
- US-B2- 9 867 367

## Beschreibung

Die vorliegende Erfindung betrifft eine Schutzvorrichtung für eine Gebäudehülle gemäss Patentanspruch 1 und die Verwendung dieser Schutzvorrichtung für eine Gebäudehülle gemäss Patentanspruch 11.

Gebäudehüllen wie Dächer und Fassaden haben idealerweise eine lange Lebensdauer und benötigen wenig bis gar keinen Unterhalt. Entsprechend werden diese über Jahre hinweg nicht überprüft und von aussen unsichtbare Schäden unterhalb der äussersten Schicht der Gebäudehülle können unbemerkt entstehen und nach einiger Zeit zu erheblichen Folgeschäden führen.

Tiere wie zum Beispiel Marder und Vögel, die durch kleine Öffnungen ab 3 cm Durchmesser an den Rändern und Übergängen der Gebäudehülle eindringen, können erhebliche Schäden an der darunter angeordneten Isolationsschicht und sogar an der Struktur oder Konstruktion der Gebäudehülle verursachen. Geräusche aufgrund der Bewegung der Tiere oder Gerüche verwesender Beutetiere und Fäkalien können noch weitere unerwünschte Störungen darstellen.

In der DE 10 2008 059 134 A1 wird eine Vorrichtung vorgestellt, welche an den Rändern von Dächern angebracht wird, um Öffnungen für Tiere unpassierbar zu machen. An einer leistenförmigen Auflagefläche werden winklig abstehende Zinken angebracht, die federnd elastisch ausgebildet sind. Die Elastizität der Zinken lässt zu, dass diese einerseits auch bei einer kleinen Öffnung heruntergedrückt werden können, ohne das Dach anzuheben, und andererseits werden die bereits eingedrungenen Tiere nicht daran gehindert, das Dach zu verlassen.

In der DE 20 2012 005 768 U1 wird ein Gitterdraht dazu benutzt, Vögel und Kleintiere davon abzuhalten, an Teilen der Dachkonstruktion zu Hacken, Nagen und Beissen, und damit Schäden anzurichten oder einen Zugang ins Innere des Dachs freizulegen.

Den bekannten Vorrichtungen gemeinsam ist die eher aufwändige Montage sowie die Möglichkeit, dass durch Herunterdrücken der Zinken bzw. Verbiegen des Gitterdrahts Tiere sich trotzdem einen Zugang zum Innern des Dachs verschaffen können.

Die Patentschriften US2020103A, US2020103A und US2035862A offenbaren Dichtungsstreifen für Gebäudehüllen mit einer Hülle, einem formbaren Aussenkörper und einem steiferen Innenkörper, wobei die Hülle den Aussenkörper umfüllt und der Aussenkörper den Innenkörper umgibt. Die US4081647A offenbart einen ähnlichen Dichtungsstreifen für ein Mikrowellengerät. Es ist aus der US9867367B2 und aus der US2019242181A1 bekannt, eine Füllung aus Stahlfasern oder Stahlwolle in Dichtungsstreifen zu verwenden, um Nagetiere abzusperren.

Die vorliegende Erfindung stellt sich nunmehr die Aufgabe, eine Schutzvorrichtung für eine Gebäudehülle bereitzustellen, welche einfach und flexibel zu montieren ist, sowie das Eindringen von Tieren in das Innere der Gebäudehülle effizient verhindert und über lange Zeit beständig ist.

Diese Aufgabe löst eine Schutzvorrichtung für eine Gebäudehülle mit den Merkmalen des Patentanspruches 1 und die Verwendung dieser Schutzvorrichtung für eine Gebäudehülle gemäss Patentanspruch 11. Weitere Merkmale und Ausführungsbeispiele gehen aus den abhängigen Ansprüchen hervor und deren Vorteile sind in der nachfolgenden Beschreibung erläutert.

Die Zeichnungen zeigen:
- Figur 1a-b: Ausführungsvarianten der Schutzvorrichtung, im Schnitt
- Figur 1c: Perspektivansicht der Schutzvorrichtung
- Figur 1d: Perspektivansicht einer gebogenen Schutzvorrichtung mit Lappen
- Figur 2a: Unterer Rand eines Daches, ohne Schutzvorrichtung
- Figur 2b: Unterer Rand eines Daches, mit Schutzvorrichtung
- Figur 2c: Seitenrand eines Daches, ohne Schutzvorrichtung
- Figur 2d: Seitenrand eines Daches, mit Schutzvorrichtung
- Figur 3a-b: Schutzvorrichtung in Öffnungen unterschiedlicher Dimensionen zwischen zwei Teilen einer Gebäudehülle
- Figur 4a: Perspektivansicht der Halterung
- Figur 4b: Schutzvorrichtung mit Halterung
- Figur 4c: Einsatz der Schutzvorrichtung mit Halterung zwischen zwei Teilen einer Gebäudehülle, im Schnitt
- Figur 5a: Perspektivansicht einer Ausführungsvariante der Halterung
- Figur 5b: Einsatz einer Ausführungsvariante der Schutzvorrichtung zwischen zwei Teilen einer Gebäudehülle, im Schnitt

Die Figuren stellen mögliche Ausführungsbeispiele dar, welche in der nachfolgenden Beschreibung erläutert werden.

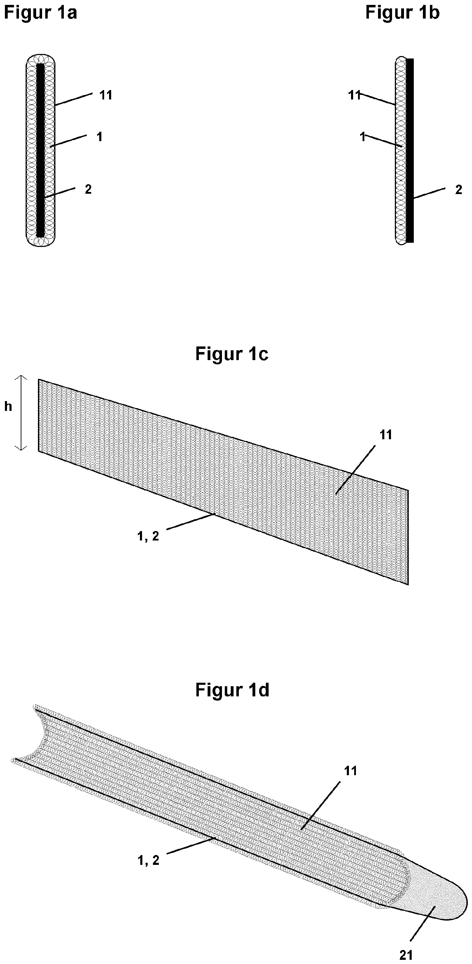

Die erfindungsgemässe Schutzvorrichtung für eine Gebäudehülle umfasst einen leicht verformbaren Aussenkörper 1 und einen steiferen Innenkörper 2 (Figuren 1a-d). Der Aussenkörper 1 ist durch eine Hülle 11 vollständig oder teilweise umhüllt und der Innenkörper 2 ist mit dem umhüllten Aussenkörper 1 vollständig oder teilweise umgeben. Der Aussenkörper 1 umfasst eine leicht verformbare Wolle aus Metall oder Kunststoff und bildet um den Innenkörper 2 herum ein verformbares Kissen. Die Hülle 11 besteht aus einem flexiblen Gitter, Geflecht oder Gewebe aus Metall. Sie ist mit dem Innenkörper 2 verbunden und dient der Befestigung des Aussenkörpers 1 um den Innenkörper 2. In der Ausführungsvariante gemäss Figur 1a ist der Aussenkörper 1 um den gesamten Umfang des Innenkörpers 2 angeordnet, und das Ganze wird durch die Hülle 11 vollständig umhüllt. In der Ausführungsvariante gemäss Figur 1b ist der Aussenkörper 1 nur auf einer Seite des Innenkörpers 2 angeordnet, wobei die Hülle 11 die freiliegende Seite des Aussenkörpers 1 vollständig umhüllt und mit dem Innenkörper 2 derart verbunden ist, dass der Aussenkörper 1 daran festgehalten wird. Der Innenkörper 2 ist vorzugsweise ein Streifen aus steifem aber verformbarem Material, bevorzugt aus Metall wie zum Beispiel Blei (Figur 1c). In der bevorzugten Ausführungsvariante ist der Innenkörper 2 ein Bleistreifen mit einer Dicke von etwa 0.5 mm bis 0.8 mm, einer Höhe h von 30 bis 100 mm und einer beliebigen Länge, die mehrere Meter betragen kann und durch den Benutzer auf die benötigte Länge gekürzt werden kann. Der Innenkörper 2 kann auch vollständig oder teilweise lackiert oder beschichtet sein. Von Vorteil ist es, wenn der Innenkörper 2 an einem oder beiden seiner Enden einen Lappen 21 aufweist, welche mit dem Aussenkörper 1 nicht umgeben sind (Figur 1d). Wenn die Schutzvorrichtung nicht aus einem einzigen Teil besteht, sondern aus mehreren

Teilen, die nebeneinander angeordnet werden, werden die Lappen 21 zwischen dem Aussenkörper 1 und dem Innenkörper 2 des nächsten Teils der Schutzvorrichtung eingeführt. Dadurch werden Spalten zwischen zwei nebeneinander angeordneten Teilen der Schutzvorrichtung vermieden, so dass es für Tiere keine Möglichkeit gibt, dazwischen zu schlüpfen. In einer Ausführungsvariante der Schutzvorrichtung weist der Innenkörper 2 Schnitte auf oder er besteht aus mehreren Teilen, die flexibel miteinander verbunden sind. Der Innenkörper 2 wird dadurch flexibler, weil er entlang der Schnitte bzw. entlang zwei benachbarten Teile einfacher zu biegen ist.

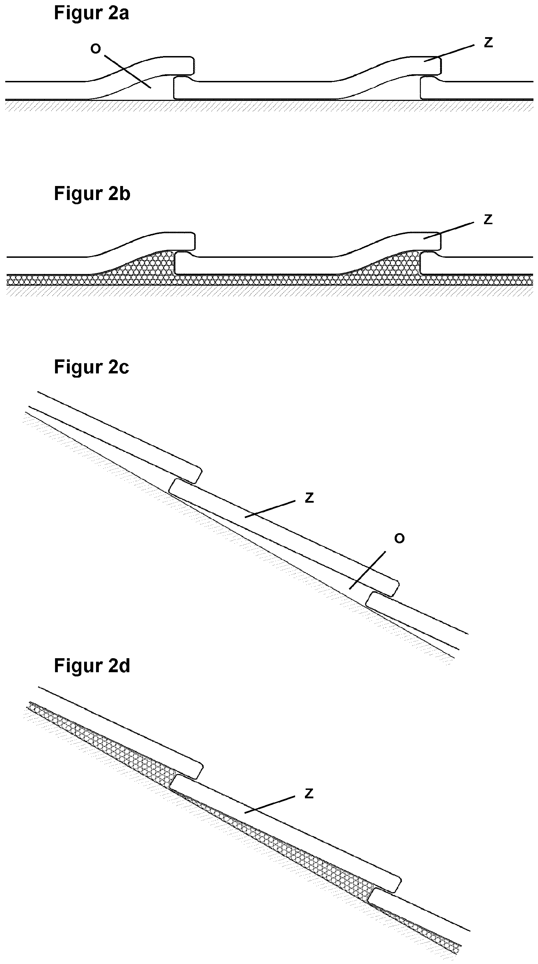

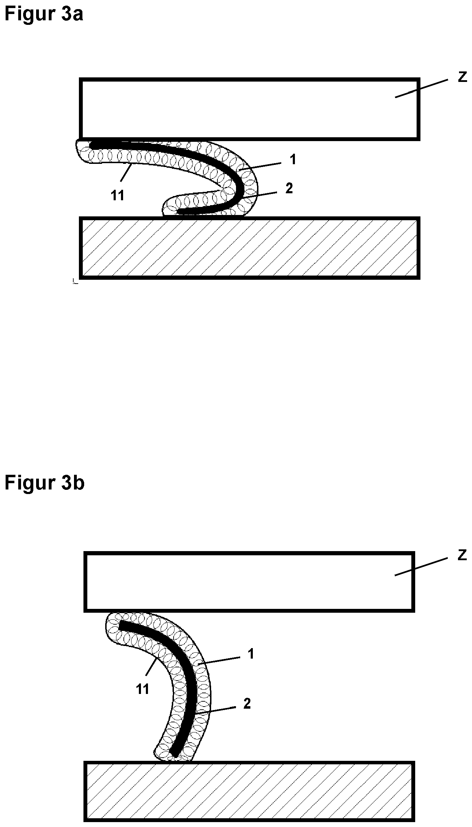

Typische Ziegeldächer weisen kleine Öffnungen O auf, durch welche Tiere wie Marder oder Vögel schlüpfen können. Diese Öffnungen befinden sich zwischen den Ziegeln Z und der Traufe am unteren Rand des Daches (Figur 2a) und zwischen den Ziegeln Z und Kehlblechen am Seitenrand des Daches (Figur 2c). Die erfindungsgemässe Schutzvorrichtung D kann zwischen den Ziegeln Z und der darunterliegenden Dachstruktur eingesetzt werden und dient dem Stopfen dieser Öffnungen O (Figuren 2b und 2d). Der Innenkörper 2 liegt vorzugsweise in Form eines Streifens vor, dessen Länge an den entsprechenden Rand des Dachs angepasst wird. Die Höhe h des Innenkörpers 2 ist vorzugsweise mindestens ein wenig grösser als der Durchmesser der zu schliessenden Öffnungen, so dass die Schutzvorrichtung leicht gebogen, darin eingeführt und geklemmt werden kann. Der Innenkörper 2 ist vorzugsweise ein Streifen mit gleichmässiger Höhe h, der je nach Durchmesser der Öffnungen mehr oder weniger stark gebogen wird (Figur 3a-b). Dank seiner Verformbarkeit kann der Innenkörper 2 an die Form des Dachrandes manuell angepasst werden, wodurch auch Öffnungen unterschiedlicher Grösse und Ausdehnung zwischen den Ziegeln Z und der darunterliegenden Struktur vollständig gestopft werden (Figur 2b und 2d). Wichtig ist beim Innenkörper 2, dass dieser durch einen Handwerker manuell verformbar ist, sei es direkt mit der Hand oder mit einem Handwerkzeug, jedoch nicht durch kleine Tiere wie Marder oder Vögel. Die im Aussenkörper 1 enthaltene Metall- oder Kunststoffwolle bildet ein Kissen um den Innenkörper 2, welches sich der Form des Dachrandes noch besser anpasst und das vollständige Stopfen der zu schliessenden Öffnungen gewährleistet, ohne den Innenkörper 2 allzu präzise an den Dachrand verformen zu müssen. Die Hülle 11, bestehend aus einem flexiblen Gitter, Geflecht oder Gewebe, dient ausserdem dem Schutz des Aussenkörpers 1 vor Hacken, Nagen und Beissen durch die abzuweisenden Tiere. Sie vermeidet insbesondere, dass durch Ziehen an der Vorrichtung eine Öffnung entstehen kann, da entweder das Gitter sich verformt oder die darunterliegende Wolle durch das umhüllende Gitter zurückgehalten wird. Eine Hülle 11 aus Metallgeflecht oder -gewebe ist besonders vorteilhaft, weil Tiere die Metallfäden nicht nagen können, diese für die Tiere unangenehm sind und diese sogar leicht verletzen können, wenn zu stark daran gezogen oder genagt wird. Aufgrund der grossen Länge der verwendeten Fäden können diese auch nicht herausgezogen werden, und durch Ziehen an einem Faden wird die Masche sowieso nur fester. In einer bevorzugten Ausführungsvariante der Schutzvorrichtung wird als Hülle 11 ein Rundstrickgewebe aus Kupfer verwendet.

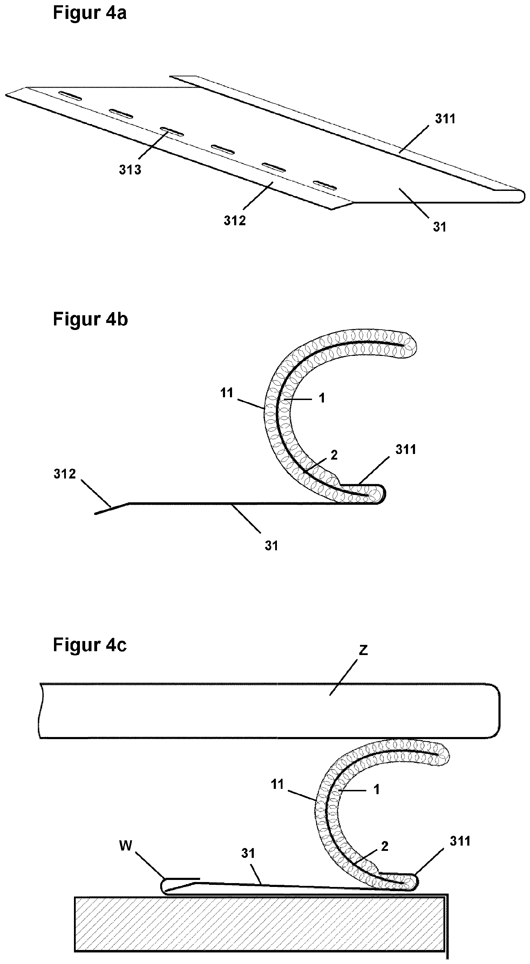

In einer vorteilhaften Ausführungsvariante der Erfindung ist die Schutzvorrichtung mit einer Halterung 3 versehen, die der einfachen Positionierung und Montage der Schutzvorrichtung am Dachrand dient (Figur 4a). Die Halterung 3 umfasst ein erstes Profil 31, welches an einem Rand einen Umschlag 311 aufweist. Das erste Profil 31 besteht aus Kunststoff oder Metall, insbesondere Edelstahl, und hat vorzugsweise die gleiche Länge wie der daran befestigte Innenkörper 2. Zur Befestigung des Innenkörpers 2 an der Halterung 3 wird ein Rand des Innenkörpers 2 in den Umschlag 311 eingeführt und durch Einpressen des Umschlags 311 darin fest eingeklemmt (Figur 4b). Bei der Montage der Schutzvorrichtung wird der dem Umschlag 311 entgegengesetzte Rand des ersten Profils 31 in einen bestehenden, am Dach befestigten Wasserfalz W eingeschoben (Figur 4c). Für eine einfachere Einführung in den Wasserfalz W ist es von Vorteil, wenn der dem Umschlag 311 entgegengesetzte Rand des ersten Profils 31 eine Abbiegung 312 aufweist. Zur einfachen Befestigung an der Gebäudehülle kann das erste Profil 31 Öffnungen 313 aufweisen, die dem Anschrauben oder Annageln der Schutzvorrichtung dienen.

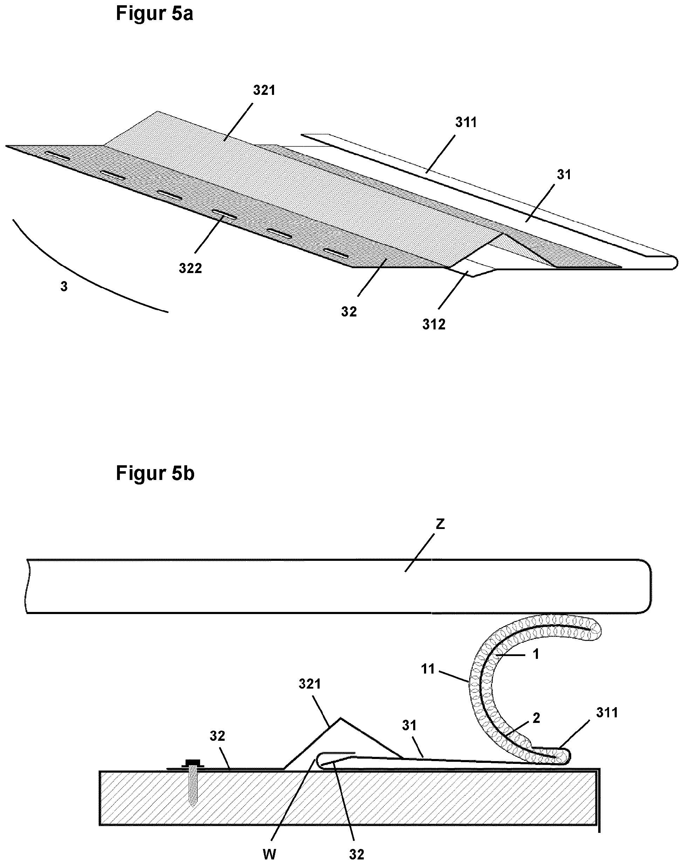

In einer besonders vorteilhaften Ausführungsvariante der Erfindung umfasst die Halterung 3 ausserdem ein zweites Profil 32, wobei die zwei Profile 31, 32 entlang deren Längsrichtung parallel miteinander verbunden sind (Figur 5a). Dabei befindet sich der Umschlag (311) an dem dem zweiten Profil (32) entgegengesetzten Rand des ersten Profils (31). Die Profile 31, 32 sind fest miteinander verbunden, vorzugsweise zusammengeschweisst oder -genietet, insbesondere können sie durch Punktschweissung des zweiten Profils 32 auf dem ersten Profil 31 miteinander verbunden werden. Das zweite Profil 32 besteht ebenfalls aus Kunststoff oder Metall, insbesondere Edelstahl, und hat vorzugsweise die gleiche Länge wie der Innenkörper 2. Das zweite Profil 32 bildet einen erhöhten Steg 321, der der Überbrückung eines am Dachrand bestehenden Wasserfalzes W dient und durch Abbiegen oder mehrfaches Abkanten des zweiten Profils 32 erhalten wird (Figur 5b). Für eine bessere Führung der Halterung 3 bei der Montage an einem bestehenden Wasserfalz W ist es von Vorteil, wenn das dem Umschlag 311 entgegengesetzte Ende des ersten Profils 31 bis unter dem erhöhten Steg 321 des zweiten Profils 32 und in den Wasserfalz W hineinragt. Das zweite Profil 32 kann ausserdem Öffnungen 322 aufweisen, die dem Anschrauben oder Annageln der Schutzvorrichtung an der Dachstruktur dienen. Die Schutzvorrichtung ist so dimensioniert, dass die Innen- und Aussenkörper 1, 2 zwischen der Halterung 3 und den Ziegeln Z gebogen und eingeklemmt werden, um jeden Durchgang zwischen den Ziegeln und der darunter angeordneten Struktur vollständig zu stopfen.

Als alternative Befestigungsmethode ist das Anbringen einer Klebevorrichtung, zum Beispiel einem Klebeband oder mehreren Klebepunkten, an der Halterung 3 vorgesehen. Diese Befestigungsmethode ist auch für die Schutzvorrichtung ohne Halterung möglich, wobei in diesem Fall die Klebevorrichtung direkt an der Hülle 11 angebracht ist. Mit Hilfe der Klebevorrichtung kann die Schutzvorrichtung an beliebiger Stelle problemlos befestigt werden, insbesondere auch um ein Dachfenster herum, oder an anderen Stellen wo eine Befestigung mit Schrauben oder Nägeln nicht möglich oder gewünscht ist.

## Patentansprüche

1. Schutzvorrichtung für eine Gebäudehülle umfassend einen formbaren Aussenkörper (1) und einen steiferen Innenkörper (2), wobei
der Aussenkörper (1) durch eine Hülle (11) vollständig oder teilweise umhüllt ist,
der Innenkörper (2) mit dem umhüllten Aussenkörper (1) vollständig oder teilweise umgeben ist, und
die Hülle (11) aus einem flexiblen Gitter, Geflecht oder Gewebe besteht, mit dem Innenkörper (2) verbunden ist und den Aussenkörper (1) um den Innenkörper (2) festhält,
**dadurch gekennzeichnet, dass**
der Aussenkörper (1) eine formbare Wolle aus Metall oder Kunststoff umfasst, welche um den Innenkörper (2) ein formbares Kissen bildet und
die Hülle (11) aus Metallgeflecht oder -gewebe besteht.

2. Schutzvorrichtung gemäss Anspruch 1,
**dadurch gekennzeichnet, dass**
der Aussenkörper (1) Stahlwolle umfasst.

3. Schutzvorrichtung gemäss Anspruch 1,
**dadurch gekennzeichnet, dass**
der Innenkörper (2) ein Streifen aus steifem aber manuell verformbarem Material ist.

4. Schutzvorrichtung gemäss Anspruch 1,
**dadurch gekennzeichnet, dass**
die Hülle (11) aus Kupfer-Rundstrickgewebe besteht.

5. Schutzvorrichtung gemäss Anspruch 1,
**gekennzeichnet durch**
eine Halterung (3) umfassend ein erstes Profil (31), das an einem Rand einen Umschlag (311) aufweist.

6. Schutzvorrichtung gemäss Anspruch 5,
**dadurch gekennzeichnet, dass**
ein Rand des Innenkörpers (2) im Umschlag (311) eingeführt ist und durch Einpressen des Umschlags (311) darin fest eingeklemmt ist.

7. Schutzvorrichtung gemäss Anspruch 5,
**dadurch gekennzeichnet, dass**
die Halterung (3) ein zweites Profil (32) umfasst, das einen erhöhten Steg (321) bildet,
wobei das erste und das zweite Profil (31, 32) entlang deren Längsrichtung parallel miteinander verbunden sind.

8. Schutzvorrichtung gemäss Anspruch 7,
**dadurch gekennzeichnet, dass**
das dem Umschlag (311) entgegengesetzte Ende des ersten Profils (31) bis unter dem erhöhten Steg (321) des zweiten Profils (32) ragt.

9. Schutzvorrichtung gemäss Anspruch 1,
**dadurch gekennzeichnet, dass**
eine Klebevorrichtung an der Hülle (11) angebracht ist, mit welcher die Schutzvorrichtung an einem beliebigen Ort der Gebäudehülle befestigbar ist.

10. Schutzvorrichtung gemäss Anspruch 5,
**dadurch gekennzeichnet, dass**
eine Klebevorrichtung an der Halterung (3) angebracht ist, mit welcher die Schutzvorrichtung an einem beliebigen Ort der Gebäudehülle befestigbar ist.

11. Verwendung der Schutzvorrichtung gemäss einem der vorangehende Ansprüche,
**dadurch gekennzeichnet, dass**
die Schutzvorrichtung am Rande eines Ziegeldachs eingesetzt wird, zur Stopfung von Öffnungen (O) zwischen den Ziegeln (Z) und der darunterliegenden Struktur.

## Claims

1. Protection device for a building cover comprising a malleable outer body (1) and a stiffer inner body (2), wherein
the outer body (1) is completely or partially covered by a cover (11),
the inner body (2) is completely or partially surrounded by the covered outer body (1), and
the cover (11) consists of a flexible grid, mesh or fabric, is connected to the inner body (2) and holds the outer body (1) around the inner body (2),
**characterized in that**
the outer body (1) comprises a malleable wool of metal or of plastic, which forms a malleable cushion around the inner body (2) and
the cover (11) consists of metal mesh or metal fabric.

2. Protection device according to claim 1,
**characterized in that**
the outer body (1) comprises steel wool.

3. Protection device according to claim 1,
**characterized in that**
the inner body (2) is a strip of rigid but manually deformable material.

4. Protection device according to claim 1,
**characterized in that**
the cover (11) consists of a circular knit fabric of copper.

5. Protection device according to claim 1,
**characterized by**
a holder (3) comprising a first profile (31) which has a fold (311) on one edge.

6. Protection device according to claim 5,
**characterized in that**
an edge of the inner body (2) is inserted into the fold (311) and is firmly clamped therein by pressing in the fold (311).

7. Protection device according to claim 5,
**characterized in that**
the holder (3) comprises a second profile (32) which forms a raised bridge (321),
wherein the first and second profiles (31, 32) are connected parallelly to one another along their longitudinal direction.

8. Protection device according to claim 7,
**characterized in that**
the end of the first profile (31) opposite the cover (311) extends below the raised bridge (321) of the second profile (32).

9. Protection device according to claim 1,
**characterized in that**
an adhesive device is attached to the cover (11), with which the protection device can be attached to any location on the building cover.

10. Protection device according to claim 5,
**characterized in that**
an adhesive device is attached to the holder (3), with which the protection device can be attached to any location on the building cover.

11. Use of the protection device according to one of the preceding claims, **characterized in that**
the protective device is used on the edge of a tiled roof to plug openings (O) between the tiles (Z) and the underlying structure.

## Revendications

1. Dispositif de protection pour enveloppe de bâtiment comprenant un corps extérieur malléable (1) et un corps intérieur plus rigide (2), où
le corps extérieur (1) est entièrement ou partiellement recouvert d'une enveloppe (11),
le corps intérieur (2) est entièrement ou partiellement entouré par le corps extérieur (1), et
l'enveloppe (11) est constituée d'une grille flexible, d'un tressage ou d'un tissu, elle est reliée au corps intérieur (2) et elle maintient le corps extérieur (1) autour du corps intérieur (2),
**caractérisé en ce que**
le corps extérieur (1) comprend une laine malléable en métal ou en plastique qui forme un coussin malléable autour du corps intérieur (2) et **en ce que** l'enveloppe (11) est constituée d'un tressage ou tissu métallique.

2. Dispositif de protection selon la revendication 1,
**caractérisé en ce que**
le corps extérieur (1) comprend de la laine d'acier.

3. Dispositif de protection selon la revendication 1,
**caractérisé en ce que**
le corps interne (2) est une bande de matériau rigide mais déformable manuellement.

4. Dispositif de protection selon la revendication 1,
**caractérisé en ce que**
l'enveloppe (11) est constituée d'un tissu à maille circulaire en cuivre.

5. Dispositif de protection selon la revendication 1,
**caractérisé par**
un support (3) comprenant un premier profilé (31) qui présente un repli (311) sur un bord.

6. Dispositif de protection selon la revendication 5,
**caractérisé en ce que**
un bord du corps interne (2) est inséré dans le repli (311) et y est fermement serré par pincement du repli (311).

7. Dispositif de protection selon la revendication 5,
**caractérisé en ce que**
le support (3) comprend un deuxième profilé (32) qui forme un pont surélevé (321),
les premier et deuxième profilés (31, 32) étant reliés parallèlement l'un à l'autre le long de leur direction longitudinale.

8. Dispositif de protection selon la revendication 7,
**caractérisé en ce que**
l'extrémité du premier profilé (31) opposée au repli (311) s'étend au-dessous du pont surélevé (321) du deuxième profilé (32).

9. Dispositif de protection selon la revendication 1,
**caractérisé en ce que**
un dispositif adhésif est fixé sur l'enveloppe (11), grâce auquel le dispositif de protection peut être fixé à n'importe quel endroit de l'enveloppe du bâtiment.

10. Dispositif de protection selon la revendication 5,
**caractérisé en ce que**
un dispositif adhésif est fixé sur le support (3), grâce auquel le dispositif de protection peut être fixé à n'importe quel endroit de l'enveloppe du bâtiment.

11. Utilisation du dispositif de protection selon l'une des revendications précédentes,
**caractérisé en ce que**
le dispositif de protection est utilisé en bordure d'un toit de tuiles pour boucher les ouvertures (O) entre les tuiles (Z) et la structure sous-jacente.
